# EUROPEAN PATENT APPLICATION

(11) **EP 2 733 331 A2**
(43) Date of publication of application: **21.05.2014**
(21) Application number: 13193192.5
(22) Date of filing: 15.11.2013
(51) Int. Cl.: F02C 9/28

(54) **System and method for reducing modal coupling of combustion dynamics**

(30) Priority: 19.11.2012 US 201213680379
(71) Applicant: General Electric Company, Schenectady, New York 12345 (US)
(72) Inventor: Crothers, Sarah Lori, Greenville, SC South Carolina 29615 (US); Ziminsky, Willy Steve, Greenville, SC South Carolina 29615 (US); Stevenson, Christian Xavier, Greenville, SC South Carolina 29615 (US)
(74) Representative: Cleary, Fidelma

(57) **Abstract**

A system for reducing modal coupling of combustion dynamics includes a plurality of combustors (42), and at least one fuel injector (66) in each of the plurality of combustors (42). The system also includes structure for dithering a combustion instability frequency in at least one combustor in the plurality of combustors (42). A method for reducing modal coupling of combustion dynamics includes flowing a compressed working fluid (38) at a temperature to a plurality of combustors (42) and flowing a fuel to at least one fuel injector (66) in each of the plurality of combustors (42). The method further includes dithering at least one of the temperature of the compressed working fluid (38) flowing to the plurality of combustors (42) or the fuel flow to the at least one fuel injector (66) in at least one combustor in the plurality of combustors (42).

## Description

### FIELD OF THE INVENTION

The present invention generally involves a system and method for reducing modal coupling of combustion dynamics. In particular embodiments, the system and method may be incorporated into a gas turbine or other turbomachine.

### BACKGROUND OF THE INVENTION

Combustors are commonly used in industrial and commercial operations to ignite fuel to produce combustion gases having a high temperature and pressure. For example, gas turbines and other turbomachines typically include one or more combustors to generate power or thrust. A typical gas turbine used to generate electrical power includes an axial compressor at the front, multiple combustors around the middle, and a turbine at the rear. Ambient air enters the compressor as a working fluid, and the compressor progressively imparts kinetic energy to the working fluid to produce a compressed working fluid at a highly energized state. The compressed working fluid exits the compressor and flows through one or more fuel injectors in the combustors where the compressed working fluid mixes with fuel before igniting to generate combustion gases having a high temperature and pressure. The combustion gases flow to the turbine where they expand to produce work. For example, expansion of the combustion gases in the turbine may rotate a shaft connected to a generator to produce electricity.

Various factors influence the design and operation of the combustors. For example, higher combustion gas temperatures generally improve the thermodynamic efficiency of the combustors. However, higher combustion gas temperatures also promote flame holding conditions in which the combustion flame migrates toward the fuel being supplied by the fuel injectors, possibly causing accelerated wear to the fuel injectors in a relatively short amount of time. In addition, higher combustion gas temperatures generally increase the disassociation rate of diatomic nitrogen, increasing the production of nitrogen oxides (NO_{X}). Conversely, a lower combustion gas temperature associated with reduced fuel flow and/or part load operation (turndown) generally reduces the chemical reaction rates of the combustion gases, increasing the production of carbon monoxide and unburned hydrocarbons.

At particular operating conditions, combustion dynamics at specific frequencies and with sufficient amplitudes, which are in-phase and coherent, may produce undesirable sympathetic vibrations in the turbine and/or other downstream components. Typically, this problem is managed by combustor tuning. Combustor tuning to protect the turbine buckets, however, may impose severe restrictions on the function and operability of the combustor.

Altering the frequency relationship between two or more combustors may reduce the coherence of the combustion system as a whole, diminishing any combustor-to-combustor coupling. In the context of this invention, coherence refers to the strength of the linear relationship between two (or more) dynamic signals, which is strongly influenced by the degree of frequency overlap between them. As the combustion dynamics frequency in one combustor is driven away from that of the other combustors, modal coupling of combustion dynamics is reduced, which, in turn, reduces the ability of the combustor tone to cause a vibratory response in downstream components. Therefore, a system and method that reduces the modal coupling of combustion dynamics by altering the frequency difference between two or more combustors would be useful for enhancing the thermodynamic efficiency of the combustors, protecting against accelerated wear, promoting flame stability, and/or reducing undesirable emissions over a wide range of operating levels, without detrimentally impacting the life of the downstream hot gas path components.

### BRIEF DESCRIPTION OF THE INVENTION

Aspects and advantages of the invention are set forth below in the following description, or may be obvious from the description, or may be learned through practice of the invention.

One aspect of the present invention is a system for reducing modal coupling of combustion dynamics. The system includes a plurality of combustors, and at least one fuel injector in each of the plurality of combustors. The system also includes means for dithering a combustion instability frequency in at least one combustor in the plurality of combustors.

Another aspect of the present invention is a gas turbine that includes a compressor section configured to produce a compressed working fluid at a temperature, a plurality of combustors downstream from the compressor section, wherein each combustor comprises a fuel injector, and a turbine section downstream from the plurality of combustors. The gas turbine further includes means for dithering the temperature of the compressed working fluid produced by the compressor section.

The present invention also resides in a method for reducing modal coupling of combustion dynamics that includes flowing a compressed working fluid at a temperature to a plurality of combustors and flowing a fuel to at least one fuel injector in each of the plurality of combustors. The method further includes dithering at least one of the temperature of the compressed working fluid flowing to the plurality of combustors or the fuel flow to the at least one fuel injector in at least one combustor in the plurality of combustors.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
Fig. 1 is a simplified side cross-section view of an exemplary gas turbine according to various embodiments of the present invention;
Fig. 2 is a simplified side cross-section view of an exemplary combustor according to various embodiments of the present invention;
Fig. 3 is an upstream plan view of the cap assembly shown in Fig. 2 according to an embodiment of the present invention;
Fig. 4 is an upstream plan view of the cap assembly shown in Fig. 2 according to an alternate embodiment of the present invention;
Fig. 5 is a simplified side cross-section view of a system for dithering the compressor discharge temperature according to various embodiments of the present invention;
Fig. 6 is a diagram of a system for dithering fuel to the combustors according to alternate embodiments of the present invention; and
Fig. 7 is an exemplary flow diagram of a method for preventing modal coupling of the combustion system, according to various embodiments of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream," "downstream," "radially," and "axially" refer to the relative direction with respect to fluid flow in a fluid pathway. For example, "upstream" refers to the direction from which the fluid flows, and "downstream" refers to the direction to which the fluid flows. Similarly, "radially" refers to the relative direction substantially perpendicular to the fluid flow, and "axially" refers to the relative direction substantially parallel to the fluid flow.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include a system and method for reducing modal coupling of combustion dynamics. The system and method generally include multiple combustors, and each combustor includes one or more fuel injectors for mixing fuel with a compressed working fluid prior to combustion. The system and method may further include means for dithering a combustion instability frequency in at least one combustor. In particular embodiments, the means for dithering the combustion instability frequency in at least one combustor may dither a temperature of the compressed working fluid and/or dither a fuel flow to one or more fuel injectors. As used herein, the term "dithering" means modulating or oscillating, and the timing and amount of the dithering may be random, scheduled, and/or in response to one or more of the amplitude, phase, coherence, and/or frequencies of combustion instabilities in two or more combustors. In particular embodiments, the system and method may dither at least one of a temperature of a working fluid entering a compressor section, a flow rate of the working fluid entering the compressor section, or a flow rate of the compressed working fluid recirculated through the compressor section. Alternately or in addition, the system and method may dither at least one of the fuel flow, a temperature of the fuel flow, or a Wobbe index of the fuel flow to one or more of the fuel injectors in one or more of the combustors. As a result, various embodiments of the present invention may dither the frequency relationship between two or more combustors to reduce the coherence of the combustion system as a whole and diminish any combustor-to-combustor coupling. This may reduce the ability of the combustor tone to cause a vibratory response in downstream components. Although exemplary embodiments of the present invention will be described generally in the context of combustion dynamics in a gas turbine for purposes of illustration, one of ordinary skill in the art will readily appreciate that embodiments of the present invention may be applied to any combustion dynamics and are not limited to a gas turbine unless specifically recited in the claims.

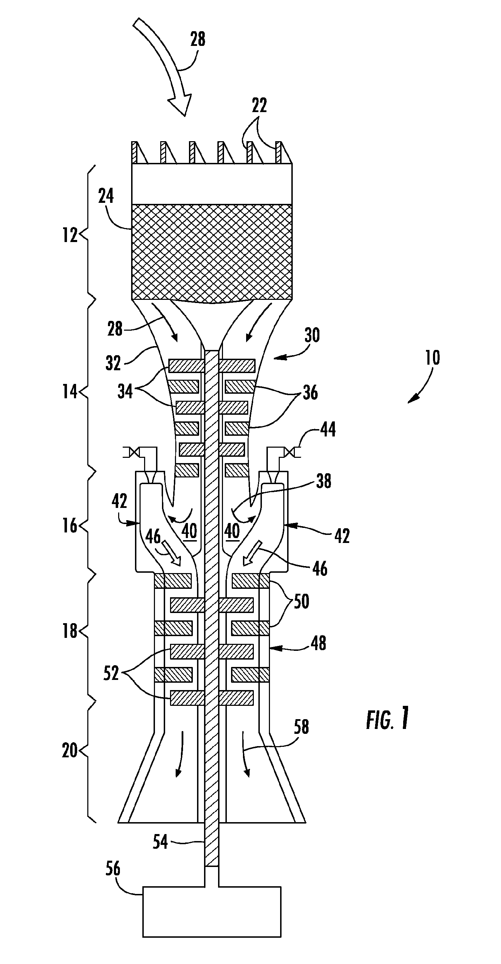

Referring now to the drawings, wherein identical numerals indicate the same elements throughout the figures, Fig. 1 provides a simplified side cross-section view of an exemplary gas turbine 10 that may incorporate various embodiments of the present invention. As shown, the gas turbine 10 may generally include an inlet section 12, a compressor section 14, a combustion section 16, a turbine section 18, and an exhaust section 20. The inlet section 12 may include a series of filters 22 and one or more fluid conditioning devices 24 to clean, heat, cool, moisturize, demoisturize, and/or otherwise condition a working fluid (e.g., air) 28 entering the gas turbine 10. The cleaned and conditioned working fluid 28 flows to a compressor 30 in the compressor section 14. A compressor casing 32 contains the working fluid 28 as alternating stages of rotating blades 34 and stationary vanes 36 progressively accelerate and redirect the working fluid 28 to produce a continuous flow of compressed working fluid 38 at a higher temperature and pressure.

The majority of the compressed working fluid 38 flows through a compressor discharge plenum 40 to one or more combustors 42 in the combustion section 16. A fuel supply 44 in fluid communication with each combustor 42 supplies a fuel to each combustor 42. Possible fuels may include, for example, blast furnace gas, coke oven gas, natural gas, methane, vaporized liquefied natural gas (LNG), hydrogen, syngas, butane, propane, olefins, diesel, petroleum distillates, and combinations thereof. The compressed working fluid 38 mixes with the fuel and ignites to generate combustion gases 46 having a high temperature and pressure.

The combustion gases 46 flow along a hot gas path through a turbine 48 in the turbine section 18 where they expand to produce work. Specifically, the combustion gases 46 may flow across alternating stages of stationary nozzles 50 and rotating buckets 52 in the turbine 48. The stationary nozzles 50 redirect the combustion gases 46 onto the next stage of rotating buckets 52, and the combustion gases 46 expand as they pass over the rotating buckets 52, causing the rotating buckets 44 to rotate. The rotating buckets 52 may connect to a shaft 54 that is coupled to the compressor 30 so that rotation of the shaft 54 drives the compressor 30 to produce the compressed working fluid 46. Alternately or in addition, the shaft 54 may connect to a generator 56 for producing electricity. Exhaust gases 58 from the turbine section 18 flow through the exhaust section 20 prior to release to the environment.

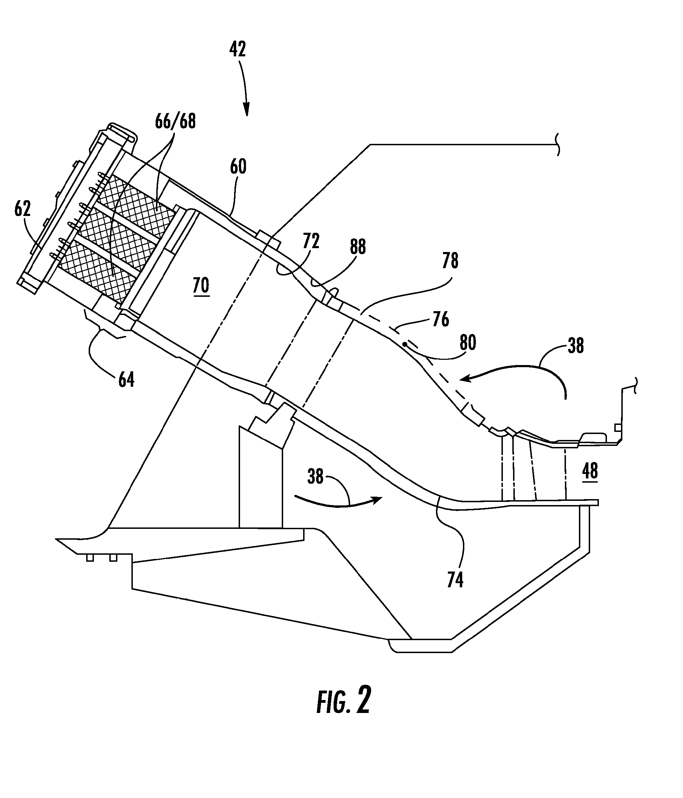

The combustors 42 may be any type of combustor known in the art, and the present invention is not limited to any particular combustor design unless specifically recited in the claims. Fig. 2 provides a simplified side cross-section view of an exemplary combustor 42 according to various embodiments of the present invention. As shown in Fig. 2, a combustor casing 60 and an end cover 62 may combine to contain the compressed working fluid 38 flowing to the combustor 42. A cap assembly 64 may extend radially across at least a portion of the combustor 42, and one or more fuel injectors 66 may be radially arranged across the cap assembly 64 to supply fuel to a combustion chamber 70 downstream from the cap assembly 64. A liner 72 may circumferentially surround at least a portion of the combustion chamber 70, and a transition duct 74 downstream from the liner 72 may connect the combustion chamber 70 to the inlet of the turbine 48. An impingement sleeve 76 with flow holes 78 may circumferentially surround the transition duct 74, and a flow sleeve 88 may circumferentially surround the liner 72. In this manner, the compressed working fluid 38 may pass through the flow holes 78 in the impingement sleeve 76 to flow through an annular passage 80 outside of the transition duct 74 and liner 72. When the compressed working fluid 38 reaches the end cover 62, the compressed working fluid 38 reverses direction to flow through the fuel injectors 66 into the combustion chamber 70.

Although generally shown as cylindrical, the radial cross-section of the fuel injectors 66 may be any geometric shape, and the present invention is not limited to any particular radial cross-section unless specifically recited in the claims. In addition, various embodiments of the combustor 42 may include different numbers and arrangements of fuel injectors 66 in the cap assembly 64.

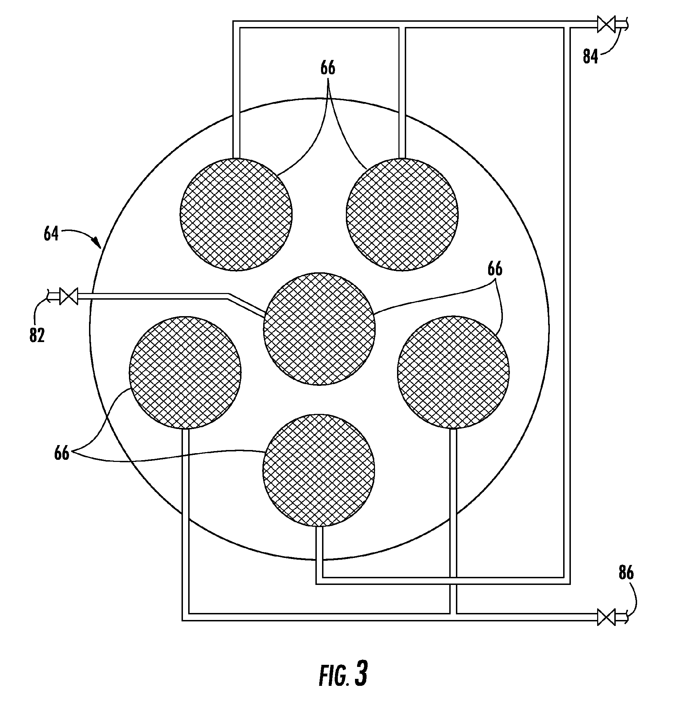

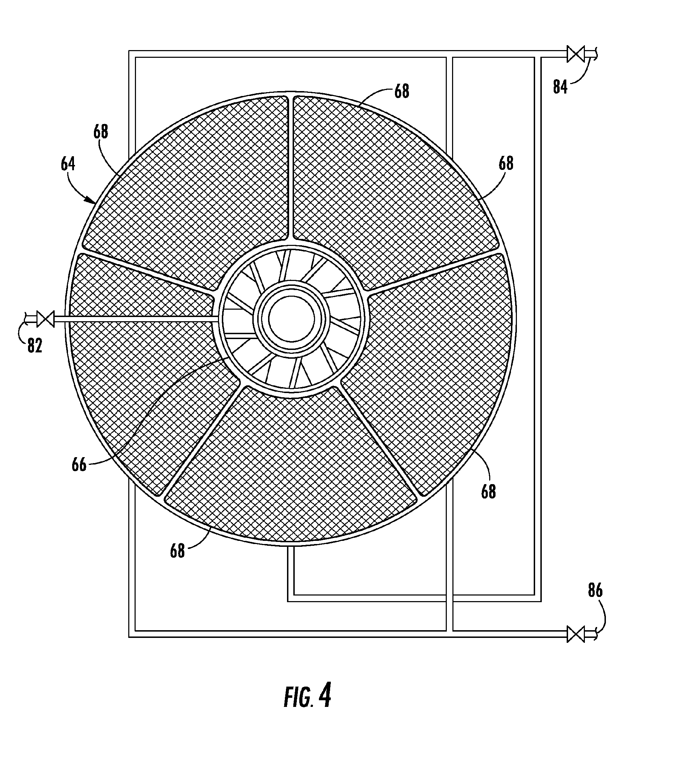

Figs. 3 and 4 provide upstream plan views of exemplary arrangements of the fuel injectors 66 in the cap assembly 64 within the scope of the present invention. As shown in Fig. 3, for example, multiple fuel injectors 66 may be radially arranged around a single fuel injector 66. Alternatively, a plurality of non-circular pie-shaped fuel injectors 68 may circumferentially surround a single fuel injector 66, as shown in Fig. 4. One of ordinary skill in the art will readily appreciate multiple other shapes and arrangements for the fuel injectors 66, 68 from the teachings herein, and the particular shape and arrangement of the fuel injectors 66, 68 are not limitations of the present invention unless specifically recited in the claims.

The fuel injectors 66, 68 may be divided into various groups or circuits to facilitate multiple fueling regimes over the range of operations. For example, in the exemplary arrangements shown in Figs. 3 and 4, the center fuel injector 66 and/or one of the outer fuel injectors 66, 68 may receive fuel from a first fuel circuit 82, while one or more of the surrounding fuel injectors 66, 68 may be grouped to receive the same or a different fuel from a second and/or third fuel circuit 84, 86. During base load operations, fuel may be supplied to each fuel injector 66, 68 shown in Figs. 3 and 4 through all three fuel circuits 82, 84, 86, while fuel flow may be reduced or completely eliminated from one or more of the fuel injectors 66, 68 during reduced or turndown operations.

An overlap between the combustion instability frequency and the downstream component resonant frequency may result in unwanted vibration of the downstream components. Alternately or in addition, a coherent relationship between the frequencies of two or more combustors 42 may exacerbate the vibratory response of the downstream components. Various embodiments of the present invention seek to vary or oscillate the frequency in the combustors such that there is a timing delay in the frequency variation between two or more combustors 42 by dithering the temperature of the compressed working fluid 38 and/or the fuel flow supplied to the combustors 42. The timing and amount of the dithering may be random, scheduled, and/or in response to one or more of the amplitude, phase, coherence and/or frequency of the combustion instabilities. In this manner, the embodiments of the present invention may produce a combustion instability frequency in a first combustor that is different from the combustion instability frequency in a second combustor, reducing the modal coupling of combustion dynamics and/or coherence of the combustion system.

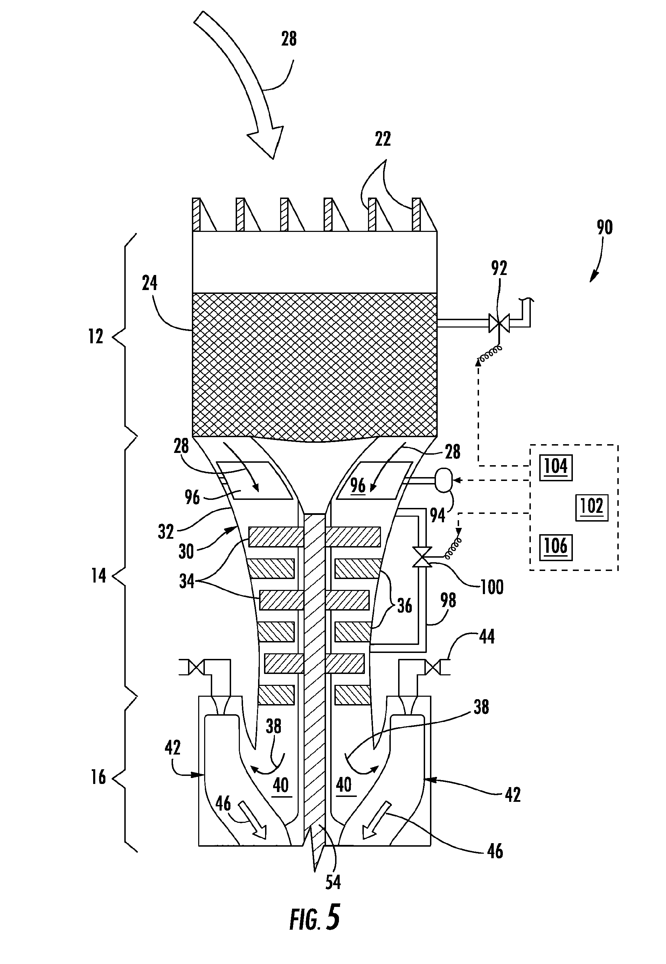

Fig. 5 provides a simplified cross-section view of a system 90 for dithering the combustion instability frequency by dithering the compressor 30 discharge temperature according to various embodiments of the present invention. A change in the temperature of the compressed working fluid 38 produced by the compressor section 14 directly affects the combustion instability frequency of each combustor 42. As shown in Fig. 5, the system 90 may be incorporated into the gas turbine 10 previously described with respect to Fig. 1 and may include various means for dithering the temperature of the compressed working fluid 38 produced by the compressor section 14. The function of the means is to modulate or oscillate the temperature of the compressed working fluid 38 produced by the compressor section 14, and the timing and amount of the dithering may be random, scheduled, and/or in response to one or more of the amplitude, phase, coherence, and/or frequency of the combustion instabilities.

In one particular embodiment shown in Fig. 5, the means may accomplish this function by dithering a temperature of the working fluid 28 entering the compressor section 14 using evaporative cooling, heat exchangers, or other temperature-altering devices known in the art. As shown in Fig. 5, the structure associated with dithering the temperature of the working fluid 28 entering the compressor section 14 may include a control valve 92, throttle valve, thermostatic expansion valve, or other suitable flow control device operably connected to the one or more temperature-altering devices 24, such as heat exchangers or evaporative coolers, in the inlet section 12. The control valve 92 may be manually and/or remotely repositioned randomly or at desired intervals to alternately increase or decrease heating or cooling provided to the working fluid 28 flowing through the inlet section 12. In this manner, the means may vary or oscillate the temperature of the working fluid 28 entering the compressor section 14, which in turn will vary or oscillate the temperature of the compressed working fluid 38 produced by the compressor section 14.

In a second embodiment shown in Fig. 5, the means may accomplish the function of varying or oscillating the temperature of the compressed working fluid 38 produced by the compressor section 14 by dithering a flow rate of the working fluid 28 entering the compressor section 14. As shown in Fig. 5, the structure associated with dithering the flow rate of the working fluid 28 entering the compressor section 14 may include an actuator 94 or other operator operably connected to one or more inlet guide vanes 96 installed in the compressor 30. The actuator 94 or other operator may be manually and/or remotely repositioned at random or periodic intervals to alternately open or close the inlet guide vanes 96, thereby increasing or decreasing the flow rate of the working fluid 28 entering the compressor section 14. In alternate embodiments, the structure associated with dithering the flow rate of the working fluid 28 entering the compressor section 14 may include one or more sets of stationary vanes 36 having variable positions, also known as variable stator vanes, to vary or oscillate the flow rate of the working fluid 28 through the compressor 30. In this manner, the means may vary or oscillate the flow rate of the working fluid 28 through the compressor 30, which in turn will vary or oscillate the temperature of the compressed working fluid 38 produced by the compressor section 14.

Fig. 5 provides a third example of suitable structure for dithering the temperature of the compressed working fluid 38 produced by the compressor section 14. Specifically, the means may accomplish the function of varying or oscillating the temperature of the compressed working fluid 38 produced by the compressor section 14 by dithering a flow rate of the compressed working fluid 38 recirculated through the compressor section 14. As shown in Fig. 5, the structure associated with dithering the flow rate of the compressed working fluid 38 recirculated through the compressor section 14 may include a conduit 98, pipe, or other fluid connection between a downstream portion of the compressor 30 and the inlet of the compressor 30. A control valve 100, throttle valve, thermostatic expansion valve, or other suitable flow control device may be manually and/or remotely repositioned at random or periodic intervals to alternately increase or decrease the flow rate of the compressed working fluid 38 diverted through the conduit 98 to recirculate through the compressor section 14. In alternate embodiments, the means may include an additional heat exchanger (not shown) operably connected to the conduit 98 to alternately heat or cool the compressed working fluid 38 recirculated through the compressor section 14. In this manner, the means may vary or oscillate the flow rate and/or temperature of the compressed working fluid 38 recirculated through the compressor section 14, which in turn will vary or oscillate the temperature of the compressed working fluid 38 produced by the compressor section 14.

In each embodiment shown in Fig. 5, the system 90 may optionally include a processor 102 to remotely and/or automatically control the dithering of the temperature of the compressed working fluid 38 produced by the compressor section 14. The processor 102 may generally be any suitable processing device known in the art and may include a memory 104 for storing logic 106 executable by the processor 102. The memory 104 may generally be any suitable computer-readable medium or media, including, but not limited to, RAM, ROM, hard drives, flash drives, or other memory devices. As is generally understood, the memory 104 may be configured to store information accessible by the processor 102, including instructions or logic 106 that can be executed by the processor 102. The instructions or logic 106 may be any set of instructions that when executed by the processor 102 cause the processor 102 to provide the desired functionality. For instance, the instructions or logic 106 can be software instructions rendered in a computer-readable form. When software is used, any suitable programming, scripting, or other type of language or combinations of languages may be used to implement the teachings contained herein. Alternatively, the instructions can be implemented by hard-wired logic or other circuitry, including, but not limited to application-specific circuits.

The technical effect of the processor 102 is to execute the logic 106 stored in the memory 104 to cause the processor 102 to dither at least one of the temperature of the working fluid 28 entering the compressor section 14, the flow rate of the working fluid 28 entering the compressor section 14, or the flow rate of the compressed working fluid 38 recirculated through the compressor section 14. As shown in Fig. 5, the processor 102 may be operably connected to one or more of the control valves 92, 100 and/or the actuator 94 to vary or oscillate the position or operation of these components. In particular embodiments, the processor 102 may be programmed to continuously dither the various control valves 92, 100 and/or the actuator 94, while in other particular embodiments, the processor 102 may be programmed to dither the various control valves 92, 100 and/or the actuator 94 randomly, when manually instructed do so, or in response to a sensed combustor instability that exceeds or drops below a predetermined limit, in terms of amplitude, frequency, phase, and/or coherence.

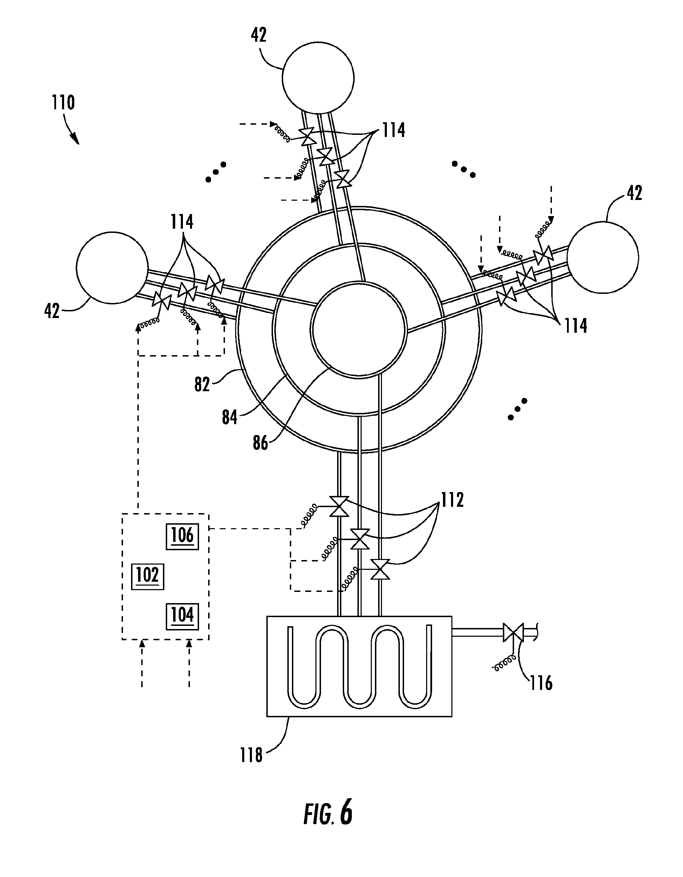

Fig. 6 provides a diagram of a system 110 for dithering the combustion instability frequency by dithering the fuel flow to one or more of the combustors 42 according to alternate embodiments of the present invention. Dithering the fuel flow to one or more of the fuel circuits supplying one or more of the combustors 42 may vary or oscillate the frequency of each combustor 42 differently due to a change in the fuel pressure ratio (i.e., combustor pressure : fuel pressure) and/or equivalence ratio resulting from the differences in the fuel flow rate, temperature, and/or energy content or Wobbe index. The temperature and/or Wobbe index of the fuel may be oscillated by pulsing the fuel flow with an additional fuel stream of a different temperature and/or Wobbe index into that supplying the one or more fuel injectors in one or more combustors.

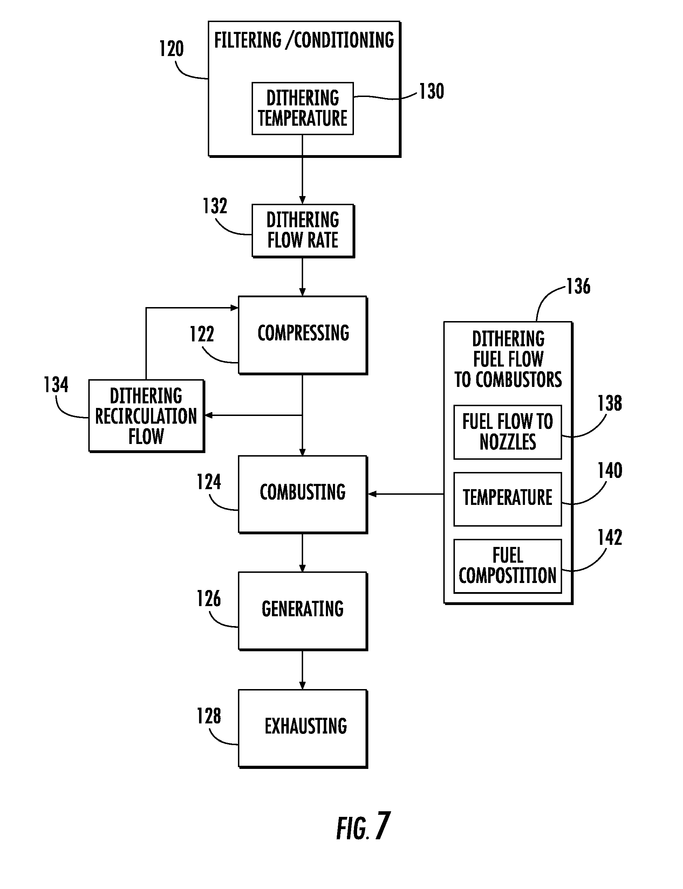

As shown in Fig. 6, the system 110 may be incorporated into the gas turbine 10 previously described with respect to Fig. 1 and may include various means for dithering the combustion instability frequency by dithering the fuel flow to one or more of the fuel circuits 82, 84, 86 in one or more combustors 42. Although only three combustors 42 are shown in Fig. 7, the present invention is not limited to any specific number of combustors 42 unless specifically recited in the claims. The function of the means is to modulate or oscillate the fuel flow to one or more of the fuel circuits 82, 84, 86 supplying one or more of the combustors 42, and the timing and amount of the dithering may be random, scheduled, and/or in response to one or more of the amplitude, phase, coherence and/or frequency of the combustion instabilities.

In one particular embodiment shown in Fig. 6, the structure associated with dithering the fuel flow to one or more of the combustors 42 may include a control valve 112, throttle valve, or other suitable flow control device operably connected to one or more of the fuel circuits 82, 84, 86 that supply fuel to one or more of the combustors 42. Each control valve 112 in the respective fuel circuits 82, 84, 86 may be manually and/or remotely repositioned randomly or at desired intervals to alternately increase or decrease the fuel flow into one more of the fuel circuits 82, 84, 86.

In other particular embodiments, the means for dithering the fuel flow to one or more of the combustors 42 may accomplish this function by dithering the fuel flow to one or more fuel injectors 66 in one or more of the combustors 42. In still further particular embodiments, the means may accomplish this function by dithering a Wobbe index by pulsing fuel of a different Wobbe index into the fuel flow supplying one or more of the fuel injectors 66 in one or more of the combustors 42. The structure associated with varying or oscillating the fuel flow to one or more fuel injectors 66 or the Wobbe index of the fuel flow to one or more of the combustors 42 may include individual control valves 114, throttle valves, or other suitable flow control devices operably connected between an alternate fuel supply and/or a heat exchanger and one or more fuel circuits 82, 84, 86 supplying one or more fuel injectors 66 in one or more combustors 42. Each individual control valve 114 may be manually and/or remotely repositioned randomly or at desired intervals to change the fuel flow supplied to one or more fuel circuits of one or more combustors 42, thus changing the fuel flow and/or Wobbe index of the fuel flow to the fuel injectors 66 and/or combustors 42. One of ordinary skill in the art will readily appreciate from the teachings herein that the individual control valves 114 between one or more fuel circuits 82, 84, 86 and one or more fuel injectors 66 may be present in addition to, or in place of, the control valves 112 in the respective fuel circuits 82, 84, 86. In this manner, the fuel flow from one or more fuel circuit 82, 84, 86 may be varied or oscillated to one or more fuel injectors 66 and/or combustors 42 to vary or oscillate the frequency of one or more combustors 42.

In yet another particular embodiment shown in Fig. 6, the means may accomplish the function of varying or oscillating the fuel flow to the combustors 42 by dithering a temperature of the fuel flow to the combustors 42. As shown in Fig. 6, the structure associated with dithering the temperature of the fuel flow to the combustors 42 may further include a control valve 116, throttle valve, thermostatic expansion valve, or other suitable flow control device operably connected to one or more heat exchangers 118 used to adjust the temperature of the fuel in one or more of the fuel circuits 82, 84, 86. One or more of the control valves 112, 114 previously described may permit pulsing of the fuel from the heat exchanger and into one or more of the fuel injectors 66 in one or more of the combustors 42. In this manner, the means may vary or oscillate the temperature of the fuel flow to the combustors 42, which in turn will vary or oscillate the fuel flow to the combustors 42.

In each embodiment shown in Fig. 6, the system 110 may optionally include the processor 102, memory 104, and logic 106, as previously discussed with respect to the embodiment shown in Fig. 5. In this particular embodiment, however, the technical effect of the processor 102 is to execute the logic 106 stored in the memory 104 to cause the processor 102 to dither at least one of the fuel flow, the temperature of the fuel flow, or the Wobbe index of the fuel flow to the combustors 42. As shown in Fig. 6, the processor 102 may be operably connected to one or more of the control valves 112, 114, 116 to vary or oscillate the position or operation of these components. In particular embodiments, the processor 102 may be programmed to continuously dither the various control valves 112, 114, 116, while in other particular embodiments, the processor 102 may be programmed to dither the various control valves 112, 114, 116 randomly, when manually instructed do so, or in response to a sensed combustor instability that exceeds or falls below a predetermined limit, in terms of amplitude, frequency, phase, and/or coherence.

One of ordinary skill in the art will readily appreciate from the teachings herein that the systems 90, 110 described and illustrated with respect to Figs. 5 and 6 may provide various methods for reducing the coherence of the combustion system, and Fig. 7 provides an exemplary flow diagram of suitable methods according to various embodiments of the present invention. The methods may generally include one or more steps associated with each section of the gas turbine 10 previously described and illustrated with respect to Fig. 1. For example, the method may include filtering and conditioning 120 the working fluid 28 in the inlet section 12. The method may further include compressing 122 the working fluid 28 to produce the compressed working fluid 38, and combusting 124 the compressed working fluid 38 with fuel to produce the combustion gases 46. Lastly, the method may include flowing the combustion gases 46 through the turbine 48 to generate 126 work and exhausting 128 the exhaust gases 58 to the environment.

As described with respect to the particular embodiment shown in Fig. 5, the method for reducing modal coupling of combustion dynamics and/or reducing combustion coherence may include dithering the temperature of the compressed working fluid 38 flowing to the combustors 42. The method may dither the temperature of the compressed working fluid 38 flowing to the combustors 42 in one or more ways. For example, the method may dither the temperature of the compressed working fluid 38 flowing to the combustors 42 by dithering the temperature of the working fluid 28 flowing through the inlet section 12, as indicated by block 130. Alternately, or in addition, the method may dither the temperature of the compressed working fluid 38 flowing to the combustors 42 by dithering the flow rate of the working fluid 38 entering the compressor section 14, as indicated by block 132. Lastly, the method may dither the temperature of the compressed working fluid 38 flowing to the combustors 42 by dithering the flow rate of the compressed working fluid 38 recirculated in the compressor 30, as indicated by block 134.

As described with respect to the particular embodiment shown in Fig. 6, the method for reducing modal coupling of combustion dynamics and/or reducing combustion coherence may include dithering the fuel flow to one or more of the fuel injectors 66 of at least one combustor 42, as indicated by block 136. The method may dither the fuel flow in one or more ways. For example, the method may dither the fuel flow to the combustors 42 by dithering the fuel flow to one or more fuel injectors 66, indicated by block 138. Alternately, or in addition, the method may dither the fuel flow to one or more fuel injectors 66 and/or combustors 42 by dithering the temperature of the fuel flow to one or more fuel injectors 66 in one or more combustors 42, indicated by block 140. Lastly, the method may dither the fuel flow to the fuel nozzles 66 and/or combustors 42 by dithering the Wobbe index of the fuel flow to one or more of the fuel injectors 66 in one or more of the combustors 42.

The various embodiments described and illustrated with respect to Figs. 1-6 may provide one or more of the following advantages over existing combustors 42. Specifically, dithering the temperature of the compressed working fluid 38 and/or the fuel flow to the combustors 42, alone or in various combinations, may decouple the combustion dynamics, thereby reducing coherence and/or modal coupling of combustion dynamics. As a result, the various embodiments described herein may enhance thermodynamic efficiency, promote flame stability, and/or reduce undesirable emissions over a wide range of operating levels, without detrimentally impacting the life of the downstream hot gas path components.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A system for reducing modal coupling of combustion dynamics, comprising:
a. a plurality of combustors (42);
b. at least one fuel injector (66) in each of the plurality of combustors (42); and
c. means (102) for dithering a combustion instability frequency in at least one combustor (42) in the plurality of combustors.

2. The system as in claim 1, wherein the means for dithering the combustion instability frequency in at least one combustor in the plurality of combustors (42) dithers a fuel flow (136) to at least one fuel injector (66) in at least one combustor in the plurality of combustors (42).

3. The system as in claim 1 or 2, wherein the means (102) for dithering the combustion instability frequency in at least one combustor in the plurality of combustors (42) dithers a temperature (130) of a fuel flow to at least one fuel injector (66) in at least one combustor in the plurality of combustors (42).

4. The system as in any of claims 1 to 3, wherein the means (102) for dithering the combustion instability frequency in at least one combustor in the plurality of combustors (42) dithers a Wobbe index (142) of a fuel flow to at least one fuel injector (66) in at least one combustor in the plurality of combustors (42).

5. The system as in any preceding claim, wherein the means (102) for dithering the combustion instability frequency in at least one combustor in the plurality of combustors (42) comprises a processor (102) configured to execute logic stored in a memory (104) that causes the processor (102) to dither at least one of the fuel flow, the temperature of the fuel flow, or the Wobbe index of the fuel flow to at least one fuel injector (66) in at least one combustor in the plurality of combustors (42).

6. The system as in any preceding claim, further comprising a compressor section (14) upstream from the plurality of combustors (42) configured to produce a compressed working fluid (38) at a temperature and the means (102) for dithering the combustion instability frequency in at least one combustor in the plurality of combustors (42) dithers a temperature (130) of a working fluid (28) entering the compressor section (14).

7. The system as in any preceding claim, further comprising a compressor section (14) upstream from the plurality of combustors (42) configured to produce a compressed working fluid (38) at a temperature (140) and the means (102) for dithering the combustion instability frequency in at least one combustor in the plurality of combustors (42) dithers a flow rate (132) of a working fluid (28) entering the compressor section (14).

8. The system as in any preceding claim, further comprising a compressor section (14) upstream from the plurality of combustors (42) configured to produce a compressed working fluid (38) at a temperature (140) and the means (102) for dithering the combustion instability frequency in at least one combustor in the plurality of combustors (42) dithers a flow rate (134) of the compressed working fluid (38) recirculated through the compressor section (14).

9. A gas turbine comprising:
a. a compressor section (14) configured to produce a compressed working fluid (28) at a temperature;
b. the system for reducing modal coupling combustion dynamics of any preceding claim, wherein the plurality of combustors (42) are located downstream from the compressor section (14);
c. a turbine section (18) downstream from the plurality of combustors (42); and
d. wherein the means for dithering a combustion instability frequency comprises means for dithering the temperature of the compressed working fluid (38) produced by the compressor section (14).

10. A method for reducing modal coupling of combustion dynamics, comprising:
a. flowing a compressed working fluid (28) at a temperature to a plurality of combustors (42);
b. flowing a fuel to at least one fuel injector (66) in each of the plurality of combustors (42); and
c. dithering at least one of the temperature of the compressed working fluid (28) flowing to the plurality of combustors (42) or the fuel flow to the at least one fuel injector (66) in at least one combustor in the plurality of combustors (42) .

11. The method as in claim 10, further comprising dithering a temperature (130) of the fuel flow to at least one fuel injector (66) in at least one combustor in the plurality of combustors (42).

12. The method as in claim 10 or 11, further comprising dithering a Wobbe index (142) of the fuel flow to at least one fuel injector (66) in at least one combustor in the plurality of combustors (42).

13. The method as in any of claims 10 to 12, dithering a flow rate (134) of the compressed working fluid (38) recirculated through a compressor (30).

14. The method as in any of claims 10 to 13, further comprising compressing a working fluid (28) to produce the compressed working fluid (38) and dithering at least one of a temperature (130) or flow rate (132) of the working fluid (28).
